(19) Europäisches Patentamt
European Patent Office
Office européen des brevets

(11) **EP 2 212 578 B1**

(12) **EUROPÄISCHE PATENTSCHRIFT**

(45) Veröffentlichungstag und Bekanntmachung des Hinweises auf die Patenterteilung:
**30.03.2011 Patentblatt 2011/13**

(21) Anmeldenummer: **08851910.3**

(22) Anmeldetag: **20.11.2008**

(51) Int Cl.:
**F16D 48/06** (2006.01)

(86) Internationale Anmeldenummer:
**PCT/EP2008/009841**

(87) Internationale Veröffentlichungsnummer:
**WO 2009/065591 (28.05.2009 Gazette 2009/22)**

(54) **VERFAHREN ZUR KISSPOINTADAPTION**

METHOD FOR KISS-POINT ADAPTATION

PROCEDE POUR L'ADAPTATION DU POINT DE CONTACT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.11.2007 DE 102007057081**

(43) Veröffentlichungstag der Anmeldung:
**04.08.2010 Patentblatt 2010/31**

(73) Patentinhaber:
• **GETRAG Getriebe- und Zahnradfabrik Hermann Hagenmeyer GmbH & Cie KG
74199 Untergruppenbach (DE)**
• **Bayerische Motoren Werke Aktiengesellschaft
80809 München (DE)**
• **Conti Temic Microelectronic GmbH
90411 Nürnberg (DE)**

(72) Erfinder:
• **RINCK, Rainer
91217 Hersbruck (DE)**
• **SCHUERLEIN, Markus
71691 Freiberg am Neckar (DE)**
• **SOLLER, Tobias
85737 Ismaning (DE)**

(74) Vertreter: **Witte, Weller & Partner
Phoenixbau
Königstrasse 5
70173 Stuttgart (DE)**

(56) Entgegenhaltungen:
EP-A- 0 931 961    EP-A- 1 067 008
EP-A- 1 840 401    WO-A-2006/119918
DE-C1- 19 939 818

EP 2 212 578 B1

**Beschreibung**

Die vorliegende Erfindung betrifft ein Verfahren zum Einstellen des Einrückpunktes einer Reibkupplung eines Stufengetriebes für ein Kraftfahrzeug, insbesondere einer Reibkupplung eines Doppelkupplungsgetriebes.

In Antriebssträngen mit einem Stirnradgetriebe ist generell zwischen dem Stirnradgetriebe und einem Antriebsmotor (wie einem Verbrennungsmotor) eine Reibkupplung angeordnet, die die Funktion einer Anfahr- und Trennkupplung hat. Bei Doppelkupplungsgetrieben ist zwischen den zwei Teilgetrieben und dem Antriebsmotor eine Doppelkupplungsanordnung vorgesehen. Diese Reibkupplungen können als trocken- oder als nasslaufende Kupplungen ausgebildet sein und unterliegen einem gewissen Verschleiß. Bei herkömmlichen handgeschalteten Getrieben wird der zunehmende Verschleiß der Kupplung durch eine geänderte Betätigung der Kupplung seitens des Fahrers kompensiert.

Bei automatisierten Stirnradgetrieben (wie automatisierten Schaltgetrieben (ASG) oder Doppelkupplungsgetrieben (DKG)) erfolgt die Betätigung der Reibkupplung generell durch einen zugeordneten Kupplungsaktuator. Der Kupplungsaktuator kann beispielsweise ein hydraulischer oder ein elektromechanischer Aktuator sein.

Der Aktuator kann zudem entweder druck-, kraft- oder weggesteuert ausgebildet sein.

Die Reibkupplung ist als Lastkupplung dazu ausgelegt, zumindest kurzzeitig auch hohe Drehmomente zu übertragen, die dem Drehmoment, das von dem Antriebsmotor abgegeben wird, entsprechen oder meist sogar größer sind. Für ein komfortables Einkuppeln ist die Reibkupplung vom geöffneten Zustand über einen Schlupfzustand in den geschlossenen Zustand zu überführen. Dabei legen sich das Eingangsglied und das Ausgangsglied der Reibkupplung aneinander an, wobei ab einem bestimmten Zeitpunkt ein Drehmoment übertragen wird. Als Einrückpunkt der Reibkupplung, bei dem eine gewisse Übertragung eines Momentes möglich ist, wird ein Punkt definiert (ein Stellwert des Kupplungsaktuators), bei dem die Reibkupplung ein bestimmtes, relativ kleines Drehmoment überträgt, beispielsweise einen Wert < 20 Nm.

Für sichere, komfortable und auch schnelle Schaltvorgänge ist es in automatisierten Stufengetrieben von großer Bedeutung zu wissen, bei welchem Stellwert des Kupplungsaktuators dieser Einrückpunkt erreicht ist. Wie oben erwähnt, kann sich dieser aufgrund von Verschleiß (beispielsweise der Kupplungslamellen), mechanischer Toleranzen oder durch andere Störgrößen (z.B. Setzen der Kupplungsfedern) im Laufe der Zeit ändern. Auch relativ kurzfristig veränderbare Parameter, wie beispielsweise die Temperatur, spielen hierbei eine Rolle.

Es sind diverse Verfahren im Stand der Technik bekannt geworden, um den Einrückpunkt einer Reibkupplung einzustellen.

Das Dokument DE 196 52 244 A1 betrifft ein Verfahren zur Kisspointadaption, wobei das Motormoment als wichtiger Parameter gemessen wird. Ein Grundansatz besteht darin, mehrere Betriebspunkte anzufahren, um hieraus über Mittelwertbildung eine sichere Adaption zu erzielen.

Aus der WO 2004/076224 A1 ist es bekannt, das von einer Reibkupplung übertragene Drehmoment über einen Vergleich der Drehzahlen von Motor und Getriebeeingang zu bestimmen, und zwar unter Berücksichtigung der Ansynchronisierkraft, insbesondere im Schubbetrieb während des Ansteigens der Einrückkraft.

Eine Kennlinienadaption bei laufendem Motor ist aus der WO 2004/076225 A1 bekannt, wobei die Kupplung mit einem definierten Wert geschlossen wird, anschließend ein Gang zunehmend ansynchronisiert wird und dann die Synchronisierstellgröße ermittelt wird, bei der sich die Drehzahlen von Getriebeeingang und Motor voneinander lösen.

Die EP 0 931 961 A1 betrifft ein Eichverfahren für eine Steuerkupplung bei konstanter Motordrehzahl, wobei der Kupplungseichwert aus einer Zieldrehzahländerungszeit gewonnen wird, die aus einer Profilwiderstandszeit bestimmt wird. Die Profilwiderstandszeit repräsentiert eine von der Reibcharakteristik abhängende Drehzahländerung, wobei insbesondere die Kupplung geöffnet und geschlossen und die Zeit gemessen wird, innerhalb der sich die Drehzahl eines Zahnrades um einen bestimmten Betrag verändert.

Ein ähnliches, iteratives Verfahren ist aus der EP 0 859 171 A1 bekannt.

Das Dokument DE 195 40 921 A1 betrifft den Gedanken, eine Kupplung willkürlich anzusteuern, um den Zusammenhang zwischen Kupplungsmoment und Stellgröße herzustellen.

Ein Verfahren zum Steuern der Drehmomentübertragung ist ferner aus der DE 199 39 818 C1 bekannt. Dabei soll die Fahrgeschwindigkeit durch Einrücken einer Kupplung ungleich Null sein, wobei eine parallele Kupplung ausgerückt gehalten wird. Der Eingriffspunkt der parallelen Kupplung wird ermittelt durch wenigstens teilweises Einrücken dieser Kupplung, wobei insbesondere die zeitliche Drehzahländerung einer Kupplungshälfte gemessen wird.

Die DE 102 44 393 A1 betrifft die Bestimmung des Eingriffspunktes durch Messen des Druckverlaufes und durch Bestimmen der ersten Ableitung hiervon an einem Hydraulikzylinder.

Aus der DE 100 54 867 A1 ist ein Verfahren zur Bestimmung eines Kriechpunktes einer Reibkupplung bekannt. Ein erster Kriechpunkt wird eingestellt und das Kupplungsmoment gemessen. Dann wird ein zweiter Kriechpunkt eingestellt, wenn im ersten Schritt keine Übereinstimmung vorhanden ist. Dabei wird als Bezugspunkt ein zwischen Schleifpunkt und erstem Kriechpunkt liegender Wert gewählt. Dann wird der neue zweite Kriechpunkt so eingestellt, dass eine Übereinstimmung von gewünschtem und tatsächlich übertragenem Moment erfolgt.

Ein Verfahren zur Bestimmung eines Motorreibmomentes ist aus der DE 101 13 700 A1 bekannt. Das Verfahren wird dazu benutzt, um aus dem Motormoment das an der Reibkupplung anliegende Moment zu ermitteln.

Ferner ist ein Verfahren zur Ermittlung eines Greifpunktes einer Reibkupplung aus der EP 1 741 950 A1 bekannt. Eine Reibkupplung wird geöffnet, so dass die Getriebeeingangsdrehzahl abfällt. Dann wird die Kupplung wieder geschlossen, bis der Abfall der Drehzahl gestoppt ist. Anschließend wird die Kupplung weiter geschlossen, bis die Drehzahl gleich bleibt oder abfällt. Hieraus wird der Greifpunkt berechnet.

Ein Verfahren zur Gangwechselsteuerung, bei dem das Motormoment und das Kupplungsmoment gesteuert werden, ist aus der DE 101 01 597 A1 bekannt. Die Steuerung erfolgt in Abhängigkeit von Drehzahldifferenzen.

Das Dokument DE 197 51 455 A1 betrifft ein Verfahren zur Kupplungsregelung, wobei eine Soll-Kupplungskapazität durch einen Regler anhand einer Kennfunktion eingestellt wird. Die Kennfunktion wird dabei laufend adaptiert.

Ein Verfahren zum Gangwechseln ist aus der DE 102 24 064 A1 bekannt. Dabei erfolgt ein Lösen einer Synchronisierung durch Ermitteln eines "Abschaltpunktes", der von einem Gradienten der Drehzahl des synchronisierten Zahnrades abhängt.

Schließlich ist aus der EP 1 067 008 A1 ein Verfahren zur Kupplungskennlinienadaption bekannt, und zwar für ein Doppelkupplungsgetriebe.

Hierbei soll jeweils die Kupplungskennlinie einer Kupplung adaptiert werden, die momentan nicht zur Übertragung eines Drehmomentes genutzt wird (die so genannte freie Reibkupplung). Diese wird zunächst mit einer bestimmten Kupplungsstellkraft geschlossen, und es wird gewartet, bis die Getriebeeingangswelle die Synchrondrehzahl erreicht hat (also mit der Motorwelle mitläuft). Anschließend wird eine Synchronisierung des zugeordneten freien Teilgetriebes betätigt, bis eine ausreichende Drehzahldifferenz vorhanden ist. Dann wird diese Synchronisierung gelöst, und es wird anschließend der Drehzahlgradient der Getriebeeingangswelle bestimmt. Hieraus wird der Wert des zuvor übertragenen Kupplungsmomentes berechnet. Anhand dieses Wertes wird in Verbindung mit der zuvor festgelegten Kupplungsstellkraft eine Kupplungskennlinienadaption durchgeführt.

Vor diesem Hintergrund ist es die Aufgabe der Erfindung, ein verbessertes, insbesondere schnelleres Verfahren zum Einstellen des Einrückpunktes einer Reibkupplung anzugeben.

Diese Aufgabe wird gelöst durch ein Verfahren zum Einstellen des Einrückpunktes einer Reibkupplung eines Stufengetriebes für ein Kraftfahrzeug, insbesondere einer Reibkupplung eines Doppelkupplungsgetriebes, wobei die Reibkupplung mittels eines Kupplungsaktuators gesteuert, vorzugsweise geregelt betätigbar ist und wobei wenigstens eine Synchron-Schaltkupplung zum Ein- und Auslegen einer Gangstufe des Stirnradgetriebes mittels eines Schaltaktuators gesteuert betätigbar ist, wobei ferner ein Sollwert des Kupplungsaktuators für den Einrückpunkt der Reibkupplung in Abhängigkeit von einem Drehzahlgradientwert eingestellt wird, der sich ausgehend von einem Übergangszustand mit betätigter Reibkupplung und betätigter Schaltkupplung ergibt, nachdem die Schaltkupplung geöffnet wird, wobei der Übergangszustand hergestellt wird, indem der Kupplungsaktuator und der Schaltaktuator im Wesentlichen gleichzeitig auf einen jeweiligen Übergangswert eingestellt werden.

Durch die Maßnahme, den Kupplungsaktuator und den Schaltaktuator im Wesentlichen gleichzeitig auf jeweilige Übergangswerte einzustellen, kann der Übergangszustand schneller hergestellt werden. Hierdurch kann eine Einstellung des Einrückpunktes auch innerhalb relativ kurzer Phasen erfolgen, in denen das zugeordnete Teilgetriebe im Fahrbetrieb nicht benötigt wird. Ferner ist es möglich, eine eventuell anstehende Schaltung (bei der das freie Teilgetriebe dann benutzt wird) nicht zu verzögern.

Anders herum ergibt sich eine erhöhte Wahrscheinlichkeit, dass das Verfahren zum Einstellen des Einrückpunktes nicht durch eine vom Fahrer bzw. Fahrbetrieb geforderte Schaltung unterbrochen wird.

Ein Übergangswert kann ein fester Wert sein oder auch beispielsweise ein mit der Zeit veränderliches Signal.

Generell erfolgt die Einstellung des Einrückpunktes unmittelbar in Abhängigkeit von dem ermittelten Drehzahlgradientwert nach Durchführung des erfindungsgemäßen Verfahrens. Es ist folglich nicht notwendig, das hierbei von der Reibkupplung übertragene Drehmoment zu berechnen. Allerdings besteht zwischen dem ermittelten Drehzahlgradientwert und dem von der Reibkupplung in dem Übergangszustand übertragenen Drehmoment ein bestimmter, in der Regel auch berechenbarer Zusammenhang. Mit anderen Worten kann aus dem Drehzahlgradientwert auch auf das übertragene Kupplungsmoment geschlossen werden, sofern dies von Interesse ist.

Die Aufgabe wird somit vollkommen gelöst.

Von besonderem Vorteil ist es, wenn der Kupplungsaktuator in dem Übergangszustand auf einen Übergangswert eingestellt wird, der dem bisherigen Sollwert für den Einrückpunkt entspricht.

Hierdurch kann sichergestellt werden, dass die Einstellung des Einrückpunktes auf der Grundlage von Bedingungen stattfindet, wie sie auch im normalen Reibkupplungsbetrieb beim Erreichen des Einrückpunktes vorliegen. Generell ist es jedoch auch denkbar, den Kupplungsaktuator in dem Übergangszustand auf einen anderen Wert als den bisherigen Sollwert einzustellen, wobei der Übergangswert so festgelegt sein sollte, dass die Reibkupplung nur ein vergleichsweise geringes Drehmoment übertragen kann (beispielsweise < 20 Nm).

Ferner ist es vorteilhaft, wenn der Schaltaktuator in dem Übergangszustand dazu angesteuert wird, um die zugeordnete Schaltkupplung zu schließen.

Bei dieser Ausführungsform ist vorteilhaft, dass während des Übergangszustandes im Wesentlichen keine Drehmomentschwankungen über der Schaltkupplung auftreten können und somit zu Beginn der Auswertung des Drehzahlgradientwertes konstante Drehzahlverhältnisse vorhanden sind.

Gemäß einer alternativen Ausführungsform wird der Schaltaktuator in dem Übergangszustand dazu angesteuert, um über die Schaltkupplung ein größeres Drehmoment zu übertragen als über die Reibkupplung, ohne jedoch die zugeordnete Schaltkupplung zu schließen.

Bei dieser Ausführungsform ist vorteilhaft, dass eine etwas höhere Sicherheit gegenüber Fehlersituationen gegeben ist, da die zugeordnete Schaltkupplung des freien Getriebes nicht in den Formschluss gebracht wird.

Insgesamt ist es ferner vorteilhaft, wenn die Einstellung des Einrückpunktes der Reibkupplung in einem nicht aktiven Zweig eines Doppelkupplungsgetriebes erfolgt, während das Fahrzeug fährt.

Bei einem automatisierten Stirnradgetriebe mit nur einer Eingangskupplung und einem einzelnen Getriebezweig kann eine solche Vorgehensweise nicht realisiert werden, da im Fahrbetrieb die einzige Reibkupplung und das Getriebe nicht frei sind. Bei einem Doppelkupplungsgetriebe kann hingegen der freie Zweig (d.h. das freie Teilgetriebe und die freie Reibkupplung) dazu verwendet werden, eine Einstellung des Einrückpunktes der freien Reibkupplung vorzunehmen, und zwar während des Fahrbetriebs und einer Drehmomentübertragung auf den Abtrieb über den anderen Zweig des Doppelkupplungsgetriebes. Es versteht sich, dass auf diese Weise beide Reibkupplungen des Doppelkupplungsgetriebes im Fahrbetrieb angepasst werden, je nachdem, welcher Zweig gerade frei ist.

Prinzipiell kann die zur Einstellung des Einrückpunktes verwendete Schaltkupplung jeder beliebigen Gangstufe des freien Teilgetriebes zugeordnet sein.

Es ist jedoch von besonderem Vorteil, wenn die zur Einstellung des Einrückpunktes der Reibkupplung verwendete Schaltkupplung jener Gangstufe des freien Teilgetriebes zugeordnet ist, die zu der im aktiven Zweig verwendeten Gangstufe benachbart ist.

Wenn beispielsweise in dem aktiven Zweig die Gangstufe 3 (der dritte Gang) eingelegt ist, kann in dem freien Zweig zur Einstellung des Einrückpunktes der Reibkupplung beispielsweise die Schaltkupplung für die Gangstufe 2 oder die Schaltkupplung für die Gangstufe 4 verwendet werden. Vorteilhaft hierbei ist, dass die aufgetretenen Drehzahldifferenzen nicht zu groß werden, so dass die Abarbeitung des erfindungsgemäßen Verfahrens insgesamt in schnellerer Zeit und mit weniger Verschleiß erfolgen kann.

Während beim Doppelkupplungsgetriebe die Einstellung des Einrückpunktes der Reibkupplung in dem nicht aktiven Zweig während der Fahrt erfolgen kann, ist es bei einer alternativen Ausführungsform vorgesehen, die Einstellung des Einrückpunktes der Reibkupplung durchzuführen, während das Fahrzeug steht.

Diese Ausführungsform kann natürlich bei Doppelkupplungsgetrieben angewendet werden, unter anderem beim Einlernen des Einrückpunktes einer Kupplung. Beispielsweise kann diese Ausführungsform jedoch auch bei einem automatisierten Stirnradgetriebe mit nur einer Reibkupplung und einem einzelnen Getriebezweig durchgeführt werden.

Gemäß einer insgesamt bevorzugten Ausführungsform wird vor der Einstellung des Einrückpunktes eine Referenzmessung durchgeführt, um das durch Reibungsverluste (beispielsweise von Lagern im Getriebe etc.) und durch das Schleppmoment der Kupplung auftretende Verhalten zu ermitteln und bei späteren Einstellungen des Einrückpunktes zu berücksichtigen.

Das Schleppmoment kann sich beispielsweise aus einem Kupplungsschleppmoment und einem Verlustmoment im Getriebe zusammensetzen.

Die Genauigkeit der Einstellung des Einrückpunktes kann hierdurch verbessert werden. Mit anderen Worten kann die Adaption des Einrückpunktes unabhängig von dem herrschenden Schleppmoment eingestellt werden.

Von besonderem Vorteil ist es dabei, wenn bei der Referenzmessung eine Einstellung eines Übergangswertes des Schaltaktuators und ein anschließendes Öffnen der zugeordneten Schaltkupplung sowie eine Ermittlung des Drehzahlgradientwertes erfolgen, während die Reibkupplung geöffnet ist.

Mit anderen Worten kann die Referenzmessung auf die gleiche Art und Weise durchgeführt werden wie das erfindungsgemäße Verfahren, bei dem der Kupplungsaktuator auf einen Übergangswert eingestellt wird. Bei der Referenzmessung bleibt die Reibkupplung jedoch geöffnet, um auf diese Weise das Verhalten des freien Teilgetriebes zu beobachten und bei der anschließenden Einstellung des Einrückpunktes gemäß dem erfindungsgemäßen Verfahren berücksichtigen zu können.

Ferner ist es insgesamt bevorzugt, wenn das Öffnen der Schaltkupplung bei dem erfindungsgemäßen Verfahren aus dem Übergangszustand heraus erfolgt, nachdem der Übergangswert des Kupplungsaktuators einen Wert innerhalb eines Sollbereiches erreicht hat.

Auf diese Weise kann gewährleistet werden, dass das Öffnen der Schaltkupplung aus dem Übergangszustand heraus erst dann erfolgt, wenn an der Reibkupplung ein vorgegebener Zustand erreicht ist.

Gemäß einer weiteren insgesamt bevorzugten Ausführungsform ist der Drehzahlgradientwert, in dessen Abhängigkeit der Sollwert des Kupplungsaktuators für den Einrückpunkt eingestellt wird, der Drehzahlgradientwert der Eingangswelle des Getriebes.

Bei automatisierten Schaltgetrieben ist generell ein Sensor vorhanden, der diese Eingangsdrehzahl misst. Daher ist kein zusätzlicher Hardware-Aufwand notwendig, um das erfindungsgemäße Verfahren zu implementieren.

Bei einem Doppelkupplungsgetriebe versteht sich, dass jeweils die Eingangswelle des zugeordneten (freien) Teilgetriebes hinsichtlich der Drehzahl überwacht wird, um den Drehzahlgradientwert zu ermitteln.

Ferner ist in diesem Zusammenhang anzumerken, dass dann, wenn im Rahmen der vorliegenden Anmeldung von einer Drehzahl oder einem Drehzahlgradienten einer bestimmten Welle die Rede ist, damit in gleicher Weise die Drehzahl bzw. der Drehzahlgradient jeder anderen Welle gemeint sein kann, deren Drehzahl proportional hierzu ist (also beispielsweise eine form- oder kraftschlüssige Verbindung, wie über einen Radsatz oder eine geschlossene Kupplung).

Insgesamt ist es ebenfalls vorteilhaft, wenn der Drehzahlgradientwert, in dessen Abhängigkeit der Sollwert des Kupplungsaktuators für den Einrückpunkt eingestellt wird, zu einem Zeitpunkt gemessen wird, unmittelbar bevor die betreffende Drehzahl einen Wert erreicht, der sich aufgrund des Übergangswertes des Kupplungsaktuators ergibt.

Sofern die betreffende Drehzahl beispielsweise die Eingangsdrehzahl des Getriebes ist, ergibt sich der Drehzahlgradientwert, unmittelbar bevor die Eingangsdrehzahl wieder die Motordrehzahl erreicht hat (unter der Annahme, dass sich bei dem Übergangswert des Kupplungsaktuators ein Kraftschluss zwischen Eingangsglied und Ausgangsglied der betreffenden Reibkupplung ergibt).

Beispielsweise kann die Messung des Drehzahlgradientwertes zu einem Zeitpunkt erfolgen, bei dem die Drehzahl noch 50 bis 200 U/min vor der Zieldrehzahl liegt, insbesondere etwa 75 bis 125 U/min.

Ferner ist es vorteilhaft, wenn die Zieldrehzahl eine Drehzahl eines Eingangsgliedes der Reibkupplung (16, 18) ist, insbesondere die Motordrehzahl (die als Messwert generell zur Verfügung steht).

Bevorzugt ist es auch, wenn die Mehrzahl von Messungen des Drehzahlgradienten beendet wird, wenn die Drehzahl einen Wert erreicht hat, der um eine erste vorbestimmte Drehzahldifferenz von der Zieldrehzahl unterschiedlich ist.

Auch ist es bevorzugt, wenn die Mehrzahl von Messungen des Drehzahlgradienten begonnen wird, nachdem sich die Drehzahl ausgehend von dem Übergangszustand um eine zweite vorbestimmte Drehzahldifferenz geändert hat.

Durch diese Maßnahmen können Randerscheinungen ausgeblendet werden.

Vorteilhaft ist es ferner, wenn die Mehrzahl von Messwerten des Drehzahlgradienten gefiltert wird, indem jüngere Messwerte stärker gewichtet werden als ältere Messwerte.

Dabei ist es bevorzugt, wenn die Filterung gemäß folgender Rekursionsformel erfolgt:

$$DG_{n+1}(\text{gefiltert}) = DG_{n+1}(\text{ungefiltert}) * K1 + DG_n(\text{gefiltert}) * K2,$$

wobei $DG_n$ der n-te Messwert des Drehzahlgradienten ist und wobei K1 und K2 Konstanten sind, für die gilt: K1>K2.

Besonders bevorzugt ist es, wenn Kl+K2=1.

Gemäß einer bevorzugten Ausführungsform wird der Übergangszustand hergestellt, indem ein Prozess zum Einstellen des Kupplungsaktuators auf einen Übergangswert und ein Prozess zum Einstellen des Schaltaktuators auf einen Übergangswert zumindest abschnittsweise parallel durchgeführt werden.

Die Prozesse zum Einstellen des Kupplungsaktuators und des Schaltaktuators auf den jeweiligen Übergangswert sind nicht notwendigerweise gleichschnell. Beispielsweise kann der Prozess zum Einstellen des Kupplungsaktuators auf den Übergangwert langsamer sein als der Prozess zum Einstellen des Schaltaktuators auf den Übergangswert.

Gemäß einer weiteren bevorzugten Ausführungsform wird die Schaltkupplung aus dem Übergangszustand heraus geöffnet, sobald der Kupplungsaktuator und der Schaltaktuator ihren jeweiligen Übergangszustand erreicht haben.

Bei dieser Ausführungsform wird die Schaltkupplung aus dem Übergangszustand heraus geöffnet, sobald der langsamere der zwei Prozesse abgeschlossen ist, also der jeweilige Übergangswert erreicht ist.

Hierdurch kann der zeitliche Ablauf noch weiter optimiert werden.

Insgesamt ist es ferner bevorzugt, wenn der Kupplungsaktuator und der Schaltaktuator so angesteuert werden, dass der Schaltaktuator seinen Übergangswert früher erreicht als der Kupplungsaktuator.

Wie oben erwähnt, kann der Prozess zum Einstellen des Kupplungsaktuators auf den Übergangswert langsamer sein als der Prozess zum Einstellen des Schaltaktuators auf den Übergangswert. In diesem Fall könnte der Prozess zum Einstellen des Schaltaktuators auf den Übergangwert so ausgelöst werden, dass der Schaltaktuator und der Kupplungsaktuator ihren Übergangszustand gleichzeitig erreichen.

Bei der bevorzugten Ausführungsform, bei der der Schaltaktuator seinen Übergangswert früher erreicht als der Kupplungsaktuator, ist es von Vorteil, dass der Schaltaktuator aufgrund der in der Regel noch geöffneten Kupplung ein geringeres Moment "sieht", also mit weniger Kraftaufwand betätigt werden kann.

Das frühere Erreichen des Übergangswertes des Schaltaktuators hat zudem den Vorteil, dass dann, wenn der Kupplungsaktuator seinen Übergangswert erreicht, keine Wechselwirkung mit dem Prozess zum Einstellen des Schaltaktuators auf dessen Übergangswert mehr stattfinden kann. Hierdurch ergibt sich zum Zeitpunkt des Erreichens des Übergangswertes des Kupplungsaktuators eine größere Stabilität des Prozesses, so dass die Randbedingungen bei mehreren derartigen aufeinanderfolgenden Prozessen konstanter sind. Es gibt sich eine höhere Vergleichbarkeit solcher aufeinanderfolgender Prozesse.

Ferner ist es bevorzugt, wenn ein Prozess zum Einstellen des Kupplungsaktuators auf einen Übergangwert und ein Prozess zum Einstellen des Schaltaktuators auf einen Übergangswert im Wesentlichen gleichzeitig ausgelöst werden.

Insgesamt ist es ferner bevorzugt, wenn der Kupplungsaktuator und/oder der Schaltaktuator so angesteuert wird, dass der jeweilige Übergangswert ohne Überschwinger erreicht wird.

Hierdurch kann insbesondere bei einer hydraulischen Betätigung vermieden werden, dass ein Vorzeichenwechsel des Hydraulikdruckes auftritt. Hierdurch können Hystereseprobleme vermieden werden.

Insgesamt ist es ferner bevorzugt, wenn der Kupplungsaktuator und der Schaltaktuator unabhängig voneinander ansteuerbar sind, also bspw. über jeweils eigene Druckregelventile mit einer Hydraulikquelle verbunden sind oder eigene elektromechanische Antriebe besitzen. Hierdurch kann die Gleichzeitigkeit bzw. Parallelität der Prozesse effektiv realisiert werden.

Insgesamt lässt sich mit der vorliegenden Erfindung je nach Ausprägung wenigstens einer der folgenden Vorteile erzielen:

-   Es ergibt sich eine zeitlich schnelle Abarbeitung des Verfahrens zum Einstellen des Einrückpunktes bzw. zur Kennlinienadaption.

-   Die Art der Drehzahlgradientenmessung ist unabhängig von der Start-Differenzdrehzahl, da die Effekte der μV-Kurve (Reibbeiwert über der Differenzdrehzahl) nicht mit eingehen, insbesondere, wenn als Drehzahlgradientwert ein gefilterter Wert herangezogen wird.

-   Die Art der Drehzahlgradientenmessung setzt keine quasi-stationären Bedingungen voraus.

-   Es ist eine Kupplungsstellsignal-Überwachung möglich. Beispielsweise kann während des Übergangszustandes der Kupplungs-Ist-Druck überwacht werden. Bei einer zu großen Abweichung vom Solldruck kann das Verfahren beispielsweise abgebrochen werden.

-   Bei Durchführung einer Referenzmessung bei offener Kupplung kann das auf das freie Teilgetriebe wirkende Schleppmoment berücksichtigt werden, das sich beispielsweise aus einem Kupplungsschleppmoment und einem Verlustmoment der Welle ergibt.

-   Eine möglichst parallele Abarbeitung der Ansteuerung des Kupplungsaktuators und des Schaltaktuators wird durch die Hard- und Software ermöglicht.

-   Es ergibt sich über die Betriebslebensdauer eine gute Schaltqualität und ein guter Anfahrvorgang (Sicherheitskriterium).

-   Das erfindungsgemäße Verfahren kann so oft wie möglich erfolgen (immer dann, wenn die notwendigen Randbedingungen erfüllt sind), kann aber auch nur zu bestimmten Zeitpunkten (beispielsweise frühestens alle 30 Sekunden oder auch ein deutlich längerer Wert, wie beispielsweise jeden Tag) durchgeführt werden, oder ausschließlich bei Wartungsarbeiten.

-   Generell ist es auch möglich, das Fahrverhalten zu überwachen und in Abhängigkeit hiervon das erfindungsgemäße Verfahren durchzuführen.

-   Das Verfahren lässt sich auch umkehren, indem durch das erfindungsgemäße Verfahren der Kupplungsdrucksensor überprüft wird, und zwar unter der Annahme, dass der Einrückpunkt der Reibkupplung korrekt eingestellt ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Darstellung eines Doppelkupplungsgetriebes für ein Kraftfahrzeug;

Fig. 2    Diagramme eines Reibkupplungsstellwertes und eines Schaltkupplungs- stellwertes und von Drehzahlen zur Erläuterung des erfindungsgemäßen Verfahrens;

Fig. 3    eine der Fig. 2 vergleichbare Darstellung einer alternativen Ausführungs- form des erfindungsgemäßen Verfahrens;

Fig. 4    eine der Fig. 2 vergleichbare Darstellung zur Erläuterung einer weiteren Ausführungsform des erfindungsgemäßen Verfahrens;

Fig. 5    ein der Fig. 2 vergleichbares Diagramm eines Reibkupplungsstellwertes und eines Schaltkupplungsstellwertes zur Erläuterung des erfindungsge- mäßen Verfahrens;

Fig. 6    ein weiteres Diagramm eines Reibkupplungsstellwertes und eines Schalt- kupplungsstellwertes zur Erläuterung des erfindungsgemäßen Verfahrens; und

Fig. 7    ein Flussablaufdiagramm zur Darstellung einer Ausführungsform des erfindungsgemäßen Verfahrens.

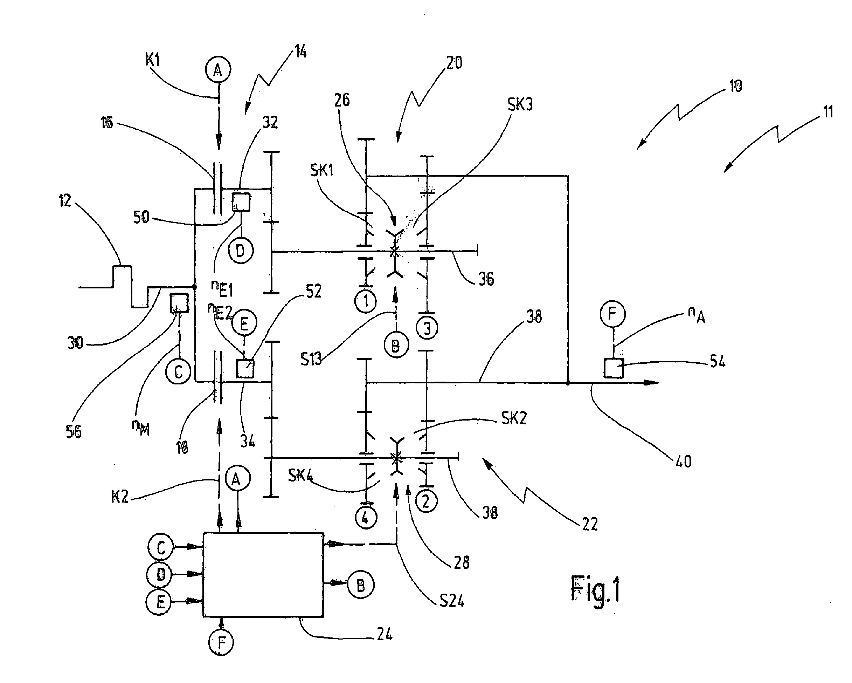

Fig. 1 zeigt in schematischer Form einen Antriebsstrang eines Kraftfahrzeuges 11, wobei der Antriebsstrang einen Antriebsmotor 12, wie einen Verbrennungsmotor (oder auch einen Elektromotor oder eine Hybrid-Antriebseinheit), und ein Doppelkupplungsgetriebe 10 aufweist.

Das Doppelkupplungsgetriebe 10 beinhaltet eine Doppelkupplungsanordnung 14 mit einer ersten Reibkupplung 16 und einer zweiten Reibkupplung 18.

Ferner weist das Doppelkupplungsgetriebe 10 ein erstes Teilgetriebe 20 und ein zweites Teilgetriebe 22 auf. Die erste Reibkupplung 16 und das erste Teilgetriebe 20 bilden einen ersten Zweig, die zweite Reibkupplung 18 und das zweite Teilgetriebe 22 einen zweiten Zweig des Doppelkupplungsgetriebes 10.

Ferner beinhaltet das Doppelkupplungsgetriebe 10 eine Steuereinrichtung 24, die dazu ausgelegt ist, das Doppelkupplungsgetriebe 10 (und gegebenenfalls andere Komponenten des Antriebsstranges) automatisiert anzusteuern.

Das Doppelkupplungsgetriebe 10 weist eine Mehrzahl von Gangstufen auf, wobei die ungeraden Gangstufen dem ersten Teilgetriebe 20 und die geraden Gangstufen dem zweiten Teilgetriebe 22 zugeordnet sind. Das Doppelkupplungsgetriebe 10 kann fünf, sechs, sieben oder mehr Gangstufen besitzen. Aus Gründen einer übersichtlicheren Darstellung ist das Doppelkupplungsgetriebe 10 in Fig. 1 lediglich mit vier Gangstufen dargestellt. Die Gangstufen 1 und 3 werden von einem Schaltkupplungspaket 26 betätigt, das eine erste Schaltkupplung SK1 und eine zweite Schaltkupplung SK3 aufweist. Die Gangstufen 2 und vier werden von einem zweiten Schaltkupplungspaket 28 betätigt, das wiederum eine erste Schaltkupplung SK2 und eine zweite Schaltkupplung SK4 aufweist.

Die Schaltkupplungen SK sind jeweils als Synchron-Schaltkupplungen ausgebildet. Alternativ ist es auch denkbar, die Schaltkupplungen als einfache Klauenkupplungen auszubilden, in welchem Fall jedoch zusätzliche Mittel zur Synchronisierung vorgesehen sein müssen, wie beispielsweise eine separate Bremse oder Ähnliches, die die entsprechende Synchronisierungsfunktion ausüben kann.

Die Eingangsglieder der Reibkupplungen 16, 18 sind gemeinsam mit einer Motorabtriebswelle 30 des Antriebsmotors 12 verbunden.

Das Ausgangsglied der Reibkupplung 16 ist mit einer ersten Getriebeeingangswelle 32 des ersten Teilgetriebes 20 verbunden. Das Ausgangsglied der Reibkupplung 18 ist mit einer zweiten Getriebeeingangswelle 34 des zweiten Teilgetriebes 22 verbunden.

Das erste Teilgetriebe 20 weist eine Vorgelegewelle 36 auf. Das zweite Teilgetriebe 22 weist eine zweite Vorgelegewelle 38 auf.

Ausgangsseitig sind die Teilgetriebe 20, 22 mit einer gemeinsamen Getriebeausgangswelle 40 verbunden, die beispielsweise mit einer Kardanwelle oder einem Eingangsglied eines Querdifferentials verbunden sein kann.

Das dargestellte Layout des Doppelkupplungsgetriebes 10 sowie die dargestellte Sensorik und Aktorik sind lediglich beispielhaft als Grundlage für die Beschreibung der Erfindung zu verstehen. Die nachfolgend erläuterte Erfindung lässt sich dabei sowohl auf Antriebsstränge für den Längs- oder Quereinbau anwenden, sowie auch auf andere Arten von Getrieben, die eingangsseitig eine Reibkupplung aufweisen, die als Anfahr- und/oder Trennkupplung dient, sowie ein einer Schaltkupplung vergleichbares Element.

Die Steuereinrichtung 24 ist mit einem schematisch angedeuteten Kupplungsaktuator K1 zur Betätigung der ersten Reibkupplung 16 sowie mit einem zweiten Kupplungsaktuator K2 zur Betätigung der zweiten Reibkupplung 18 verbunden. Ferner ist die Steuereinrichtung 24 mit einem ersten Schaltaktuator S13 zur Betätigung des Schaltkupplungspaketes 26 sowie mit einem zweiten Schaltaktuator S24 zur Betätigung des zweiten Schaltkupplungspaketes 28 verbunden. Ein Sensor 50 erfasst die Drehzahl $n_{E1}$, der ersten Getriebeeingangswelle. Ein Sensor 52 erfasst die Drehzahl

$n_{E2}$ der zweiten Getriebeeingangswelle 34. Ein Sensor 54 erfasst die Drehzahl $n_A$ der Getriebeausgangswelle 40. Ein Sensor 56 erfasst die Drehzahl $n_M$ der Motorabtriebswelle 30.

Die von dem Antriebsmotor 12 erzeugte Antriebsleistung wird alternativ entweder über die erste Reibkupplung 16 und das erste Teilgetriebe 20 auf die Getriebeausgangswelle 40 oder über die zweite Reibkupplung 18 und das zweite Teilgetriebe 22 auf die Getriebeausgangswelle 40 übertragen. Bei Übertragung von Antriebsleistung über eines der Teilgetriebe (beispielsweise über die Gangstufe 3 im Teilgetriebe 20) ist die Reibkupplung 18 des anderen Zweigs geöffnet, so dass eine benachbarte Gangstufe in dem parallelen (freien) Teilgetriebe 22 bereits eingelegt werden kann. Im Zugbetrieb wird beispielsweise die nächsthöhere Gangstufe eingelegt, im Schubbetrieb beispielsweise die nächstniedrigere Gangstufe. Ein Gangwechsel erfolgt dann, indem die zwei Reibkupplungen 16, 18 derart überschneidend betätigt werden, so dass der Gangwechsel unter Last erfolgen kann.

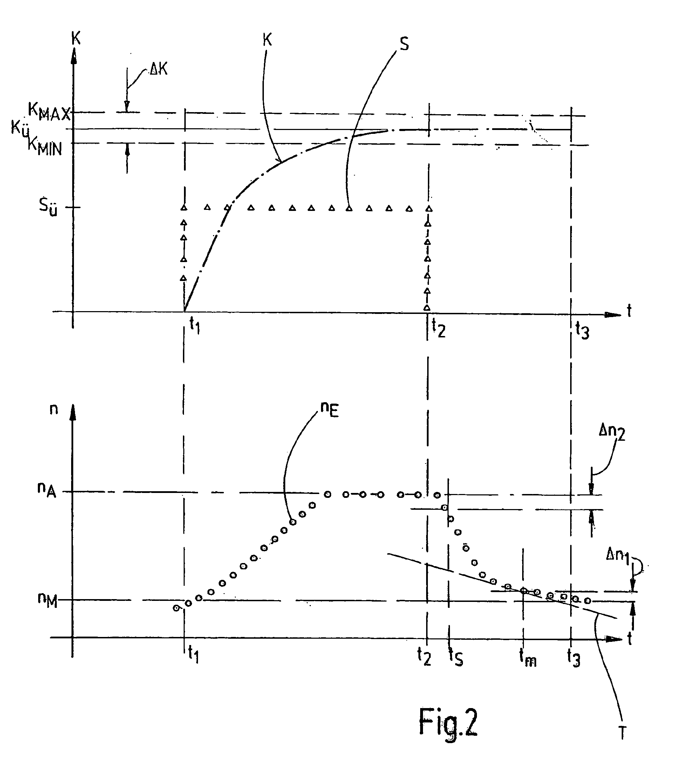

Zum Einstellen des Einrückpunktes der Reibkupplungen 16, 18 wird ein Verfahren verwendet, das nachstehend anhand der Figuren 2 bis 4 erläutert wird und beispielsweise auf das in Fig. 1 gezeigte Doppelkupplungsgetriebe anwendbar ist.

Das Einstellen des Einrückpunktes erfolgt dabei jeweils an der Reibkupplung, über die gerade keine Antriebsleistung übertragen wird, so dass das Verfahren auch während der Fahrt ausgeführt werden kann.

Fig. 2 zeigt in schematischer Form die wesentlichen Abläufe der Ansteuerung des Kupplungsaktuators K und eines hierbei verwendeten Schaltaktuators S sowie den sich hieraus ergebenden Drehzahlverlauf $n_E$ der zugeordneten Getriebeeingangswelle.

Zum Einleiten des Verfahrens zum Einstellen des Einrückpunktes der Reibkupplung (beispielsweise der Reibkupplung 16) werden der Kupplungsaktuator K und der Schaltaktuator S bei $t_1$ etwa gleichzeitig bzw. parallel zueinander betätigt und auf einen Übergangswert eingestellt. Die Leistungsübertragung des Antriebsstranges erfolgt dabei über den anderen Zweig, so dass die Getriebeabtriebswelle 40 eine bestimmte Drehzahl $n_A$ besitzt, wie es in Fig. 2 dargestellt ist. Ferner läuft der Antriebsmotor 12 in der vereinfachten Darstellung der Fig. 2 mit einer konstanten Drehzahl $n_M$.

Sofern hierbei beispielsweise im leistungsübertragenden Teilgetriebe 22 die zweite Gangstufe eingelegt ist, wird im freien Teilgetriebe eine benachbarte Gangstufe, beispielsweise die Gangstufe 1 eingelegt. Durch das Schalten der zugeordneten Schaltkupplung SK1 mit dem Schaltaktuator S13 erhöht sich demzufolge die Drehzahl $n_E$ der freien Getriebeeingangswelle (in dem gewählten Beispiel die Getriebeeingangswelle 32). Die Drehzahl wird dabei auf eine Drehzahl erhöht, die sich aus der Getriebeabtriebswellendrehzahl $n_A$ und der Übersetzung der Gangstufe, in diesem Fall die Übersetzung des ersten Ganges, ergibt. In diesem Zusammenhang versteht sich, dass die Darstellungen der Drehzahlen in Fig. 2 und den nachfolgenden Figuren jeweils normiert sind, also etwaige Übersetzungen oder Ähnliches herausgerechnet sind.

Der Übergangswert des Schaltaktuators S13 zur Betätigung der Schaltkupplung SK1 ist in Fig. 2 mit $S_{\ddot{U}}$ gekennzeichnet. Dies kann einem Sollwert entsprechend einem vollständigen Einlegen der zugeordneten Gangstufe entsprechen, oder aber einem definierten Wert, um die Schaltkupplung SK1 in einen schlupfenden Zustand zu versetzen (Ansynchronisieren).

Parallel hierzu wird, wie gesagt, der Kupplungsaktuator K betätigt und auf einen Übergangswert $K_{\ddot{U}}$ angesteuert. Der Übergangswert $K_{\ddot{U}}$ entspricht dabei einem Wert, bei dem die zugeordnete Reibkupplung 16 nur ein sehr kleines Drehmoment übertragen kann (beispielsweise < 20 Nm). Der Übergangswert $K_{\ddot{U}}$ kann beispielsweise der Sollwert des Kupplungsaktuators K für den Einrückpunkt der zugeordneten Reibkupplung 16 sein.

Sofern der Übergangswert des Kupplungsaktuators K erreicht ist (oder eine bestimmte Zeit hiernach), wird die zugeordnete Schaltkupplung wieder geöffnet, und zwar zum Zeitpunkt $t_2$. Da die zugeordnete Reibkupplung ein gewisses Drehmoment überträgt, gleicht sich die Drehzahl $n_E$ der zugeordneten Getriebeeingangswelle 32 der Drehzahl $n_M$ des Antriebsmotors 12 an (bei $t_3$). Unmittelbar bevor dieser Zustand erreicht ist (zum Zeitpunkt $t_m$), wird der dann vorliegende Drehzahlgradientwert ermittelt. Der zugeordnete Wert ist in Fig. 2 durch eine Tangente T angedeutet.

Wie erläutert, wird der Drehzahlgradientwert zu einem Zeitpunkt $t_m$ ermittelt. Der Zeitpunkt $t_m$ entspricht einem Zustand, bei dem die Drehzahl $n_E$ sich bis auf eine erste Differenzdrehzahl $\Delta n_1$ an die Drehzahl $n_M$ angenähert hat. Der Drehzahlgradient kann folglich der Wert des Drehzahlgradienten zum Zeitpunkt $t_m$ sein.

Bevorzugt wird der Drehzahlgradientwert jedoch im Wege einer Filterung ermittelt.

In Fig. 2 ist dargestellt, dass ab einem Zeitpunkt $t_s$ der Drehzahlgradient ständig ermittelt wird (z.B. alle 5 bis 25 ms). Der Zeitpunkt $t_s$ entspricht dabei einem Zeitpunkt, bei dem die Drehzahl $n_E$ sich gegenüber der Drehzahl $n_A$ um eine zweite Differenzdrehzahl $\Delta n_2$ verringert hat. Der Wert von $\Delta n_1$ kann im Bereich von 50 bis 200 U/min liegen, vorzugsweise bei etwa 100 U/min. Der Wert von $\Delta n_2$ kann in der gleichen Größenordnung liegen.

Die Mehrzahl von Messwerten des Drehzahlgradienten zwischen $t_s$ und $t_m$ wird gefiltert, indem jüngere Messwerte stärker gewichtet werden als ältere Messwerte. Dabei kann die Filterung gemäß folgender Rekursionsformel erfolgen:

$$DG_{n+1}(gefiltert) = DG_{n+1}(ungefiltert)*K1 + DG_n(gefiltert)*K2,$$

wobei $DG_n$ der n-te Messwert des Drehzahlgradienten ist und wobei K1 und K2 Konstanten sind, für die gilt: K1>K2. Ferner gilt vorzugsweise K1+K2=1. K1 kann bspw. im Bereich von 0,6 bis 0,95 liegt, besonders bevorzugt im Bereich von 0,7 bis 0,9.

Der Drehzahlgradientwert ist der letzte gefilterte Messwert des Drehzahlgradienten zum Zeitpunkt $t_m$.

Der Steigungswert (Drehzahlgradientwert) der Tangente T ist ein Maß dafür, welches Drehmoment die zugeordnete Reibkupplung 16 aufgrund des Übergangswertes $K_{\ddot{U}}$ überträgt. Demzufolge kann in einem nachfolgenden Verfahrensschritt der Sollwert des Kupplungsaktuators K für den Einrückpunkt der zugeordneten Reibkupplung 16 auf der Grundlage dieses Drehzahlgradientwertes eingestellt bzw. adaptiert werden.

Folglich wird im Rahmen des erfindungsgemäßen Verfahrens zum Einstellen des Einrückpunktes der zugeordneten Reibkupplung ein Übergangszustand hergestellt, in dem der Kupplungsaktuator K und der Schaltaktuator S im Wesentlichen gleichzeitig (zum Zeitpunkt $t_1$) auf einen jeweiligen Übergangswert $K_{\ddot{U}}$ bzw. $S_{\ddot{U}}$ eingestellt werden. Ausgehend von diesem Übergangszustand wird anschließend die zugeordnete Schaltkupplung SK geöffnet (zum Zeitpunkt $t_2$), so dass sich ein Drehzahlgradientwert ergibt, anhand dessen der Sollwert des Kupplungsaktuators K für den Einrückpunkt der zugeordneten Reibkupplung 16 eingestellt bzw. adaptiert wird. Dieses Verfahren wird auch als Kisspointadaption bezeichnet.

Wie es in Fig. 2 ferner dargestellt ist, erfolgt in Bezug auf die Stellgröße des Kupplungsaktuators K eine Bereichsüberwachung. Das Öffnen der zugeordneten Schaltkupplung zum Zeitpunkt $t_2$ erfolgt frühestens, wenn der Stellwert des Kupplungsaktuators K in einem Bereich zwischen $K_{min}$ und $K_{max}$ liegt. Der zugeordnete Bereich ist in Fig. 2 mit $\Delta K$ bezeichnet.

Generell versteht sich, dass das beschriebene Verfahren auch angewendet werden kann, indem in dem freien Zweig nicht die nächstniedrige Gangstufe (wie im obigen Beispiel die Gangstufe 1) gewählt wird, sondern die nächsthöhere Gangstufe. Generell ist es natürlich auch denkbar, andere Gangstufen als die Gangstufen heranzuziehen, die benachbart zu der momentan zur Leistungsübertragung verwendeten Gangstufe im hierzu parallelen Teilgetriebe sind.

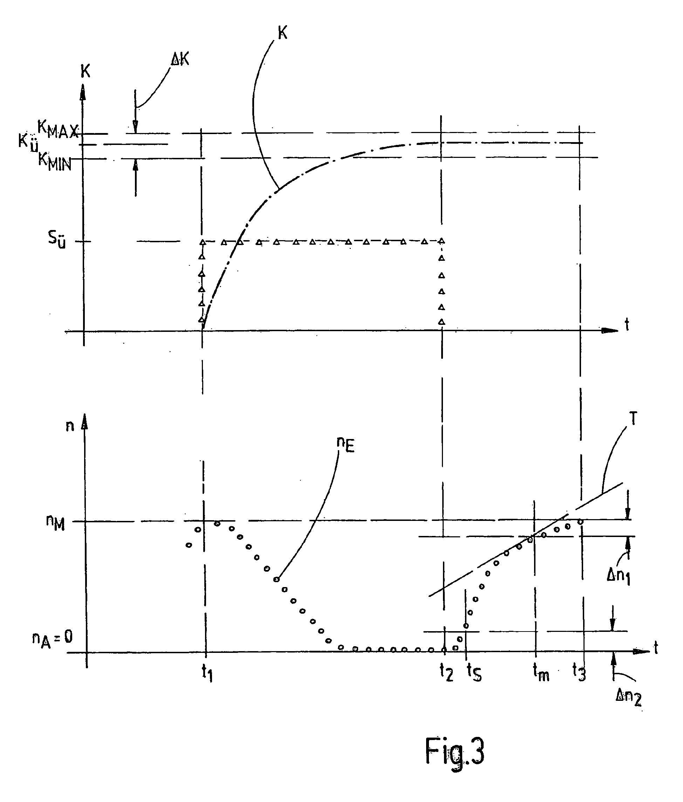

In Fig. 3 ist eine alternative Ausführungsform des erfindungsgemäßen Verfahrens dargestellt. Das Verfahren entspricht in sämtlichen Aspekten dem Verfahren, das anhand der Fig. 2 beschrieben worden ist. Der einzige Unterschied besteht darin, dass das Verfahren im Stillstand des Fahrzeugs 11 erfolgt ($n_A = 0$). Demzufolge wird die Drehzahl $n_E$ der zugeordneten Getriebeeingangswelle in dem Übergangszustand auf Null verringert, wobei die Drehzahl $n_E$ nach dem Öffnen der Schaltkupplung zum Zeitpunkt $t_2$ auf den Wert der Motordrehzahl $n_M$ hochläuft.

Das Verfahren der Fig. 3 kann beispielsweise zum Einlernen der Steuerung 24 zum erstmaligen Einstellen des Einrückpunktes der jeweiligen Reibkupplung auch mehrfach angewendet werden, wobei der Sollwert des Kupplungsaktuators K für den Einrückpunkt dann iterativ auf den richtigen Wert eingestellt wird.

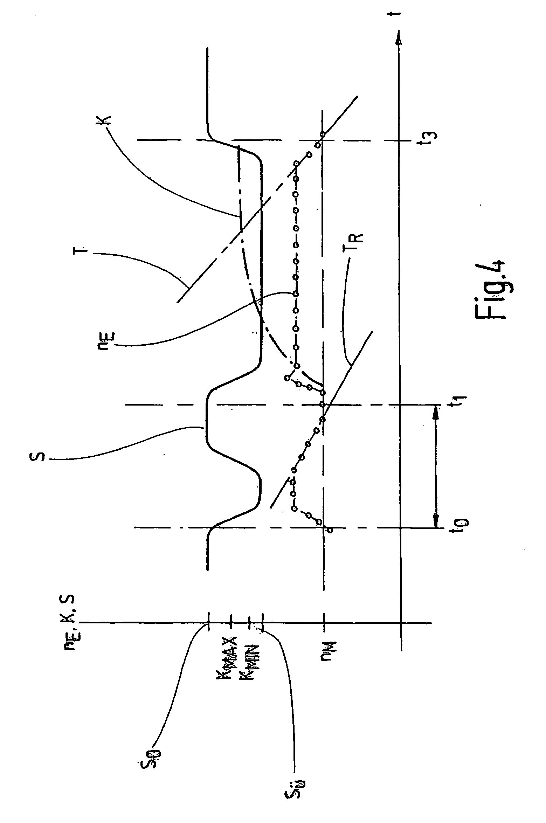

In Fig. 4 ist eine weitere alternative Ausführungsform des erfindungsgemäßen Verfahrens dargestellt.

Das Verfahren entspricht in den Zeitpunkten $t_1$ bis $t_3$ generell dem Verfahren, das in Fig. 2 dargestellt wurde.

Bei dem Verfahren der Fig. 4 wird dem erfindungsgemäßen Verfahren ein Referenzmessverfahren vorgeschaltet, das dem nachgeschalteten Messverfahren generell ähnelt (vom Zeitpunkt to bis $t_1$). In diesem Referenzmessverfahren wird der Schaltaktuator S vorab auf den Übergangswert $S_{\ddot{U}}$ eingestellt, die Reibkupplung jedoch nicht betätigt, und es wird ansonsten in der gleichen Weise ein Drehzahlgradientwert erfasst, der durch die Steigung einer Tangente $T_R$ repräsentiert ist. Durch diese Referenzmessung kann das auf das Teilgetriebe wirkende Schleppmoment, das beispielsweise aus einem Kupplungsschleppmoment und einem Verlustmoment der zugeordneten Welle resultiert, bei der anschließenden Berechnung des Sollwertes des Kupplungsaktuators für den Einrückpunkt der Reibkupplung berücksichtigt werden.

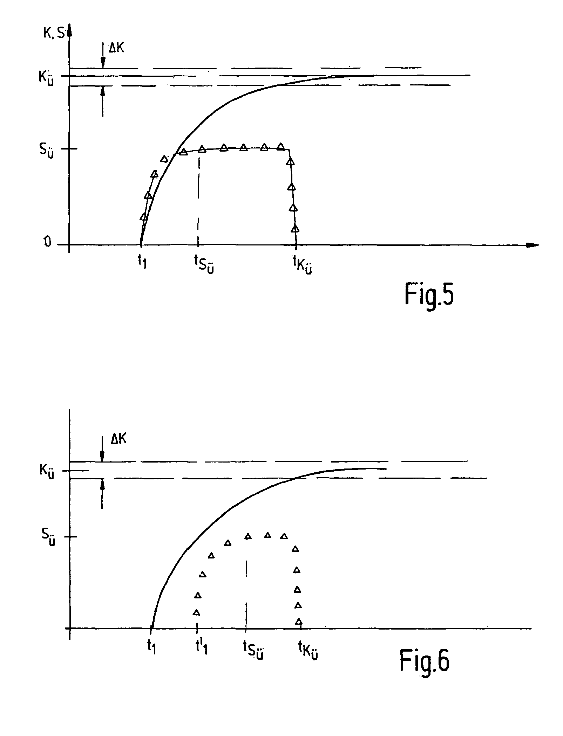

In Fig. 5 ist in schematischer Form der wesentliche Ablauf der Ansteuerung des Kupplungsaktuators K und des Schaltaktuators S gemäß einer weiteren Ausführungsform gezeigt, der generell dem in Fig. 2 gezeigten Ablauf entspricht. Im Folgenden werden lediglich Unterschiede erläutert.

Zum einen ist in Fig. 5 dargestellt, dass nicht nur ein Prozess zum Einstellen des Kupplungsaktuators K auf den Übergangswert eine gewisse Zeit beansprucht (von $t_1$ bis $t_{K\ddot{U}}$).In Fig. 5 ist vielmehr dargestellt, dass auch der Prozess zum Einstellen des Schaltaktuators S auf einen Übergangswert $S_{\ddot{U}}$ eine gewisse Zeit benötigt (von $t_1$ bis $t_{S\ddot{U}}$), die kürzer sein kann als die Zeit, die der Kupplungsaktuator benötigt. Die Prozesse werden gleichzeitig ausgelöst (zum Zeitpunkt $t_1$), so dass der Schaltaktuator S bis zum Erreichen seines Übergangswertes $S_{\ddot{U}}$ nur ein relativ geringes oder gar kein Gegenmoment "sieht", da der Kupplungsaktuator zum Zeitpunkt $t_{S\ddot{U}}$ seinen Übergangswert noch lange nicht erreicht hat. Sobald der Kupplungsaktuator K seinen Übergangswert $K_{\ddot{U}}$ erreicht (dargestellt ist dies als Zeitpunkt $t_{K\ddot{U}}$, zu dem der Kupplungsaktuator die untere Grenze des Stellwertbereiches $\Delta K$), wird die Schaltkupplung SK sofort geöffnet, um den Drehzahlgradientwert zu ermitteln, wie oben beschrieben.

Fig. 6 zeigt einen alternativen Ablauf der Ansteuerung des Kupplungsaktuators K und des Schaltaktuators S, der generell ebenfalls dem Ablauf der Fig. 2 entspricht. Im Folgenden werden lediglich Unterschiede erläutert.

Bei dieser Ausführungsform wird der Prozess zum Einstellen des Schaltaktuators S auf den Übergangswert $S_{\ddot{U}}$ zu einem späteren Zeitpunkt ($t_1$) ausgelöst als der Prozess zum Einstellen des Kupplungsaktuators K auf dessen Übergangswert $K_{\ddot{U}}$ (was zum Zeitpunkt $t_1$ erfolgt). Der zeitliche Versatz zwischen $t_1$ und $t_1$ ist so gewählt, dass die Aktuatoren ihre jeweiligen Übergangswerte $K_{\ddot{U}}$, $S_{\ddot{U}}$ im Wesentlichen gleichzeitig erreichen, zu einem Zeitpunkt $t_{K\ddot{U}}$. Zu diesem Zeitpunkt wird die Schaltkupplung sofort wieder geöffnet, um den Drehzahlgradientwert zu bestimmen, wie oben beschrieben.

Die Ausführungsform der Figuren 2 und 5 ist gegenüber der Ausführungsform der Fig. 6 bevorzugt, da zum Zeitpunkt, zu dem der Kupplungsaktuator K seinen Übergangswert $K_{\ddot{U}}$ erreicht, der Schaltaktuator S bereits stabil auf seinen Übergangswert $S_{\ddot{U}}$ eingestellt ist und somit keine Wechselwirkungen zwischen diesen Prozessen mehr stattfinden.

Bei allen zuvor beschriebenen Abläufen werden der Kupplungsaktuator K und vorzugsweise auch der Schaltaktuator S so angesteuert, dass die jeweiligen Übergangswerte Ko, $S_{\ddot{U}}$ ohne Überschwinger erreicht werden. Hierdurch können Hystereseprobleme vermieden werden.

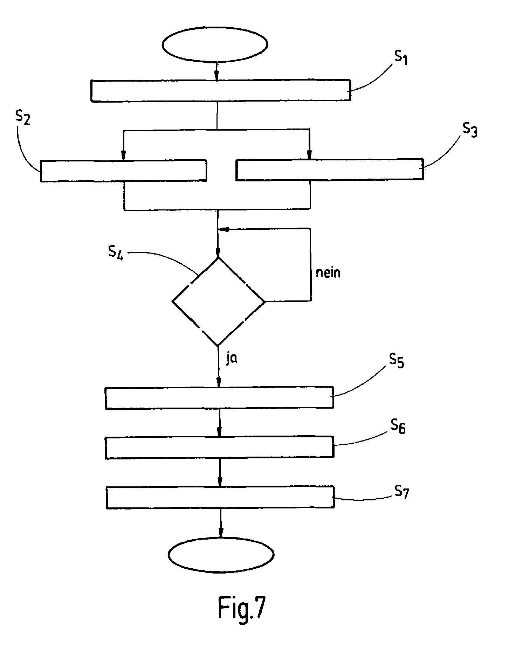

Fig. 7 zeigt ein Ablaufdiagramm einer Ausführungsform des erfindungsgemäßen Verfahrens, bei dem die Prozesse zum Einstellen des Kupplungsaktuators und des Schaltaktuators auf ihren jeweiligen Übergangswert gleichzeitig ausgelöst werden, wie es in den Figuren 2, 3, 4 und 5 dargestellt ist.

In einem Schritt S1 werden zunächst der Kupplungsstellwert und der Schaltaktuator vorbestimmt, also die Übergangswerte $K_{\ddot{U}}$ und $S_{\ddot{U}}$ festgelegt.

In den Schritten S2 und S3, die gleichzeitig stattfinden, werden die Prozesse zum Einstellen des Kupplungsaktuators K auf dessen Übergangswert $K_{\ddot{U}}$ und zum Einstellen des Schaltaktuators S auf dessen Übergangswert $S_{\ddot{U}}$ gleichzeitig ausgelöst.

Im Schritt S4 wird abgefragt, ob sowohl der Kupplungsaktuator K als auch der Schaltaktuator S ihren jeweiligen Übergangszustand Ko, $S_{\ddot{U}}$ erreicht haben. Falls nein, wird der Schritt S4 wiederholt. Sobald die Übergangswerte $K_{\ddot{U}}$ und $S_{\ddot{U}}$ erreicht sind, wird die Schaltkupplung im Schritt S5 geöffnet, also der Schaltaktuator S gelöst. Im Schritt S6 wird daraufhin der Drehzahlgradientenwert berechnet. Im Schritt S7 wird der Einrückpunkt der Reibkupplung eventuell korrigiert, je nach Ergebnis der Drehzahlgradientenwertberechnung.Bei allen oben genannten Verfahren ist es möglich, das Fahrverhalten zu überwachen und in Abhängigkeit hiervon das erfindungsgemäße Verfahren durchzuführen. Es versteht sich dabei, dass die Einstellung bzw. Adaption des Einrückpunktes der Reibkupplung dabei bereits dann erfolgen kann, wenn gewisse aufgetretene Abweichungen für den Fahrer noch nicht merkbar waren. Mit anderen Worten soll die Einstellung des Einrückpunktes so erfolgen, dass der Fahrer nicht merkt, dass eine Adaption stattgefunden hat.

Zu diesem Zweck ist es ferner möglich, das erfindungsgemäße Verfahren beispielsweise in relativ kurzen Abständen zu initiieren, beispielsweise alle 10 bis 15 min während der Fahrt. Dabei kann im Rahmen des erfindungsgemäßen Verfahrens die Einstellung bzw. Adaption des Einrückpunktes der Reibkupplung in sehr kurzen Zeiträumen durchgeführt werden, beispielsweise alle 2 bis 50 ms, insbesondere 5 bis 20 ms, mit dem Ziel, die Funktion der Kupplung insgesamt zu optimieren.

**Patentansprüche**

1. Verfahren zum Einstellen des Einrückpunktes einer Reibkupplung (16, 18) eines Stufengetriebes (10) für ein Kraftfahrzeug, insbesondere einer Reibkupplung (16, 18) eines Doppelkupplungsgetriebes (10), wobei die Reibkupplung (16, 18) mittels eines Kupplungsaktuators (K) gesteuert betätigbar ist, wobei wenigstens eine Synchron-Schaltkupplung (SK) zum Ein- und Auslegen einer Gangstufe des Stufengetriebes (10) mittels eines Schaltaktuators (S) gesteuert betätigbar ist, wobei ein Sollwert des Kupplungsaktuators (K) für den Einrückpunkt der Reibkupplung (16, 18) in Abhängigkeit von einem Drehzahlgradientwert eingestellt wird, der sich ausgehend von einem Übergangszustand mit betätigter Reibkupplung (16, 18) und betätigter Schaltkupplung (SK) ergibt, nachdem die Schaltkupplung (SK) geöffnet wird, **dadurch gekennzeichnet, dass** der Übergangszustand hergestellt wird, indem der Kupplungsaktuator (K) und der Schaltaktuator (S) im Wesentlichen gleichzeitig auf einen jeweiligen Übergangswert ($K_{\ddot{U}}$, $S_{\ddot{U}}$) eingestellt werden.

2. Verfahren nach Anspruch 1, wobei der Schaltaktuator (S) in dem Übergangszustand dazu angesteuert wird, um die zugeordnete Schaltkupplung (SK) zu schließen.

3. Verfahren nach Anspruch 1, wobei der Schaltaktuator (S) in dem Übergangszustand dazu angesteuert wird, um über die Schaltkupplung (SK) ein größeres Drehmoment zu übertragen als über die Reibkupplung (16, 18), ohne die zugeordnete Schaltkupplung (SK) zu schließen.

**4.** Verfahren nach einem der Ansprüche 1 bis 3, wobei die Einstellung des Einrückpunktes der Reibkupplung (16, 18) in einem nicht aktiven Zweig eines Doppelkupplungsgetriebes (10) erfolgt, während das Fahrzeug (11) fährt.

**5.** Verfahren nach einem der Ansprüche 1 bis 3, wobei die Einstellung des Einrückpunktes der Reibkupplung (16, 18) erfolgt, während das Fahrzeug (11) steht.

**6.** Verfahren nach einem der Ansprüche 1 bis 5, wobei vor Einstellung des Einrückpunktes eine Referenzmessung durchgeführt wird, um das hierbei wirkende Schleppmoment in dem betreffenden Zweig zu berücksichtigen.

**7.** Verfahren nach einem der Ansprüche 1 bis 6, wobei das Öffnen der Schaltkupplung (SK) aus dem Übergangszustand heraus erfolgt, nachdem der Übergangswert des Kupplungsaktuators (K) einen Wert innerhalb eines Sollbereiches ($\Delta$K) erreicht hat.

**8.** Verfahren nach einem der Ansprüche 1 bis 7, wobei der Drehzahlgradientwert, in dessen Abhängigkeit der Sollwert des Kupplungsaktuators (K) für den Einrückpunkt eingestellt wird, zu einem Zeitpunkt ($t_m$) gemessen wird, unmittelbar bevor die betreffende Drehzahl ($n_E$) einen Wert erreicht, der sich aufgrund des Übergangswertes ($K_{ü}$) des Kupplungsaktuators (K) ergibt.

**9.** Verfahren nach einem der Ansprüche 1 bis 8, wobei der Drehzahlgradientwert, in dessen Abhängigkeit der Sollwert des Kupplungsaktuators (K) für den Einrückpunkt eingestellt wird, ein gefilterter Wert einer Mehrzahl von Messungen des Drehzahlgradienten ist, die nach Öffnen der Schaltkupplung (SK) aus dem Übergangszustand heraus und vor Erreichen einer Zieldrehzahl ($n_M$) durchgeführt werden.

**10.** Verfahren zum Einstellen des Einrückpunktes einer Reibkupplung (16, 18) eines Stufengetriebes (10) für ein Kraftfahrzeug, insbesondere einer Reibkupplung (16, 18) eines Doppelkupplungsgetriebes (10), wobei die Reibkupplung (16, 18) mittels eines Kupplungsaktuators (K) gesteuert betätigbar ist, wobei wenigstens eine Synchron-Schaltkupplung (SK) zum Ein- und Auslegen einer Gangstufe des Stufengetriebes (10) mittels eines Schaltaktuators (S) gesteuert betätigbar ist, wobei ein Sollwert des Kupplungsaktuators (K) für den Einrückpunkt der Reibkupplung (16, 18) in Abhängigkeit von einem Drehzahlgradientwert eingestellt wird, der sich ausgehend von einem Übergangszustand mit betätigter Reibkupplung (16, 18) und betätigter Schaltkupplung (SK) ergibt, nachdem die Schaltkupplung (SK) geöffnet wird, **dadurch gekennzeichnet, dass**
der Übergangszustand hergestellt wird, indem ein Prozess zum Einstellen des Kupplungsaktuators (K) auf einen Übergangswert und ein Prozess zum Einstellen des Schaltaktuators (S) auf einen Übergangswert zumindest abschnittsweise parallel durchgeführt werden.

**11.** Verfahren nach einem der Ansprüche 1 bis 10, wobei die Schaltkupplung (SK) aus dem Übergangszustand heraus geöffnet wird, sobald der Kupplungsaktuator (K) und der Schaltaktuator (S) ihren jeweiligen Übergangszustand ($K_{ü}$, $S_{ü}$) erreicht haben.

**12.** Verfahren nach einem der Ansprüche 1 bis 11, wobei der Kupplungsaktuator (K) und der Schaltaktuator (S) so angesteuert werden, dass der Schaltaktuator (S) seinen Übergangswert ($S_{ü}$) früher erreicht als der Kupplungsaktuator (K).

**13.** Verfahren nach einem der Ansprüche 1 bis 12, wobei ein Prozess zum Einstellen des Kupplungsaktuators (K) auf einen Übergangswert ($K_{ü}$) und ein Prozess zum Einstellen des Schaltaktuators (S) auf einen Übergangswert ($S_{ü}$) im Wesentlichen gleichzeitig ausgelöst werden.

**14.** Verfahren nach einem der Ansprüche 1 bis 13, wobei der Kupplungsaktuator (K) und/oder der Schaltaktuator (S) so angesteuert wird, dass der jeweilige Übergangswert ($K_{ü}$, $S_{ü}$) ohne Überschwinger erreicht wird.

**15.** Verfahren nach einem der Ansprüche 1 bis 14, wobei der Kupplungsaktuator (K) und der Schaltaktuator (S) unabhängig voneinander ansteuerbar sind.

**Claims**

**1.** Method for adjusting the point of engagement of a friction clutch (16, 18) of a step-variable transmission (10) for a motor vehicle, in particular a friction clutch (16, 18) of a dual clutch transmission (10), the friction clutch (16, 18) being controllably actuated by means of a clutch actuator (K), at least one synchronizer shifting clutch (SK) being controllably actuated by means of a shift actuator (S) for the engagement and disengagement of a gear ratio of the step-variable transmission (10), a set-point of the clutch actuator (K) for the point of engagement of the friction clutch (16, 18) being adjusted as a function of a speed gradient value, which ensues from a transitional state with the friction clutch (16, 18) actuated and the shifting clutch (SK) actuated, once the shifting clutch (SK) is opened, **characterized in that** the transitional state is established by setting the clutch actuator (K) and the shift actuator (S) to a respective transitional value ($K_Ü$, $S_Ü$) substantially at the same time.

2. Method according to Claim 1, **characterized in that** the shift actuator (S) is activated in the transitional state in order to close the associated shifting clutch (SK).

3. Method according to Claim 1, **characterized in that** the shift actuator (S) is activated in the transitional state in order to transmit a higher torque via the shifting clutch (SK) than via the friction clutch (16, 18), without closing the associated shifting clutch (SK).

4. Method according to one of Claims 1 to 3, **characterized in that** the adjustment of the point of engagement of the friction clutch (16, 18) occurs in an inactive branch of a dual clutch transmission (10), whilst the vehicle (11) is underway.

5. Method according to one of Claims 1 to 4, **characterized in that** the adjustment of the point of engagement of the friction clutch (16, 18) is performed whilst the vehicle (11) is stationary.

6. Method according to one of Claims 1 to 5, **characterized in that** a reference measurement is performed prior to the adjustment of the point of engagement, in order to take account of the drag torque thereby acting in the relevant branch.

7. Method according to one of Claims 1 to 6, **characterized in that** the opening of the shifting clutch (SK) ensues from the transitional state, once the transitional value of the clutch actuator (K) has attained a value within a set range ($\Delta K$).

8. Method according to one of Claims 1 to 7, **characterized in that** the speed gradient value, as a function of which the set-point of the clutch actuator (K) for the point of engagement is adjusted, is measured at a time ($t_m$) immediately before the relevant speed ($n_E$) has attained a value that ensues on the basis of the transitional value ($K_Ü$) of the clutch actuator (K).

9. Method according to one of Claims 1 to 8, **characterized in that** the speed gradient value, as a function of which the set-point of the clutch actuator (K) for the point of engagement is adjusted, is a filtered value of a plurality of measurements of the speed gradient, which are carried out after opening of the shifting clutch (SK) from the transitional state and before attainment of the target speed (nM).

10. Method for adjusting the point of engagement of a friction clutch (16, 18) of a step-variable transmission (10) for a motor vehicle, in particular a friction clutch (16, 18) of a dual clutch transmission (10), the friction clutch (16, 18) being controllably actuated by means of a clutch actuator (K), at least one synchronizer shifting clutch (SK) being controllably actuated by means of a shift actuator (S) for the engagement and disengagement of a gear ratio of the step-variable transmission (10), a set-point of the clutch actuator (K) for the point of engagement of the friction clutch (16, 18) being adjusted as a function of a speed gradient value, which ensues from a transitional state with the friction clutch (16, 18) actuated and the shifting clutch (SK) actuated, once the shifting clutch (SK) is opened, **characterized in that** the transitional state is established **in that** a process for setting the clutch actuator (K) to a transitional value and a process for setting the shift actuator (S) to a transitional value are, at least in sections, carried out in parallel.

11. Method according to one of Claims 1 to 10, **characterized in that** the shifting clutch (SK) is opened from the transitional state as soon as the clutch actuator (K) and the shift actuator (S) have reached their respective transitional state ($K_Ü$, $S_Ü$).

12. Method according to one of Claims 1 to 11, **characterized in that** the clutch actuator (K) and the shift actuator (S) are activated so that the shift actuator (S) reaches its transitional value ($S_Ü$) earlier than the clutch actuator (K).

13. Method according to one of Claims 1 to 12, **characterized in that** a process for setting the clutch actuator (K) to a transitional value (K$_\ddot{U}$) and a process for setting the shift actuator (S) to a transitional value (S$_\ddot{U}$) are initiated substantially at the same time.

14. Method according to one of Claims 1 to 13, **characterized in that** the clutch actuator (K) and/or the shift actuator (S) are activated so that the respective transitional value (K$_\ddot{U}$, S$_\ddot{U}$) is attained without overshooting.

15. Method according to one of Claims 1 to 14, **characterized in that** the clutch actuator (K) and the shift actuator (S) can be activated independently of one another.

**Revendications**

1. Procédé pour l'adaptation du point de contact d'un embrayage à friction (16, 18) d'une boîte de vitesses à étages (10) pour un véhicule automobile, notamment d'un embrayage à friction (16, 18) d'une double boîte de vitesses (10), l'embrayage à friction (16, 18) pouvant être actionné de façon commandée à l'aide d'un actionneur d'embrayage (K), au moins un embrayage synchrone (SK) pouvant être actionné de façon commandée pour mettre et retirer un étage de la boîte de vitesses à étages (10) à l'aide d'un actionneur de changement de vitesse (S), une valeur théorique de l'actionneur d'embrayage (K) étant adaptée en fonction d'une valeur de gradient de régime pour le point de contact de l'embrayage à friction (16, 18) obtenu en partant d'un état de transition avec l'embrayage à friction (16, 18) actionné et l'embrayage de changement de vitesse (SK) actionné, après ouverture de l'embrayage de changement de vitesse (SK), **caractérisé en ce que** l'état de transition est obtenu en réglant l'actionneur d'embrayage (K) et l'actionneur de changement de vitesse (S) pour l'essentiel simultanément à une valeur de transition (K$_\ddot{u}$, S$_\ddot{U}$) respective.

2. Procédé selon la revendication 1, l'actionneur de changement de vitesse (S) étant commandé, à l'état de transition, pour fermer l'embrayage de changement de vitesse (SK) associé.

3. Procédé selon la revendication 1, l'actionneur de changement de vitesse (S) étant commandé à l'état de transition pour transmettre, par le biais de l'embrayage de changement de vitesse (SK), un couple plus important que celui transmis via l'embrayage à friction (16, 18) sans fermer l'embrayage de changement de vitesse (SK) associé.

4. Procédé selon l'une quelconque des revendications 1 à 3, le réglage du point de contact de l'embrayage à friction (16, 18) se produisant dans une ramification non active d'une double boîte de vitesses (10), pendant que le véhicule (11) roule.

5. Procédé selon l'une quelconque des revendications 1 à 3, le réglage du point de contact de l'embrayage à friction (16, 18) se produisant pendant que le véhicule (11) est à l'arrêt.

6. Procédé selon l'une quelconque des revendications 1 à 5, une mesure de référence étant réalisée avant le réglage du point de contact, pour tenir compte du couple de remorquage agissant ici dans la ramification concernée.

7. Procédé selon l'une quelconque des revendications 1 à 6, l'ouverture de l'embrayage de changement de vitesse (SK) se produisant à partir de l'état de transition, après que la valeur de transition de l'actionneur d'embrayage (K) a atteint une valeur comprise à l'intérieur d'une plage théorique ($\Delta K$).

8. Procédé selon l'une quelconque des revendications 1 à 7, la valeur de gradient de régime, en fonction de laquelle la valeur théorique de l'actionneur d'embrayage (K) est adaptée pour le point de contact, étant mesurée à un instant ($t_m$), juste avant que le régime ($n_E$) concerné n'ait atteint une valeur obtenue sur la base de la valeur de transition (K$_\ddot{u}$) de l'actionneur d'embrayage (K).

9. Procédé selon l'une quelconque des revendications 1 à 8, la valeur de gradient de régime, en fonction de laquelle la valeur théorique de l'actionneur d'embrayage (K) est adaptée pour le point de contact, étant une valeur filtrée d'une pluralité de mesures du gradient de régime, appliquée après ouverture de l'embrayage de changement de vitesse (SK) à partir de l'état de transition et avant d'atteindre un régime cible ($n_M$).

10. Procédé pour l'adaptation du point de contact d'un embrayage à friction (16, 18) d'une boîte de vitesses à étages (10) pour un véhicule automobile, notamment d'un embrayage à friction (16, 18) d'une double boîte de vitesses (10), l'embrayage à friction (16, 18) pouvant être actionné de façon commandée à l'aide d'un actionneur d'embrayage (K), au moins un embrayage de changement de vitesse synchrone (SK) pouvant être actionné de façon commandée pour mettre et retirer un étage de la boîte de vitesses à étages (10) à l'aide d'un actionneur de changement de vitesse (S), une valeur théorique de l'actionneur d'embrayage (K) étant adaptée, pour le point de contact de l'embrayage à friction (16, 18), en fonction d'une valeur de gradient de régime obtenue à partir d'un état de transition avec l'embrayage à friction (16, 18) actionné et l'embrayage de changement de vitesse (SK) actionné, après ouverture de l'embrayage de changement de vitesse (SK), **caractérisé en ce que** l'état de transition est obtenu en réalisant en parallèle, au moins par périodes, un processus d'adaptation de l'actionneur d'embrayage (K) à une valeur de transition et un processus d'adaptation de l'actionneur de changement de vitesse (S) à une valeur de transition.

11. Procédé selon l'une quelconque des revendications 1 à 10, l'embrayage de changement de vitesse (SK) s'ouvrant à partir de l'état de transition dès que l'actionneur d'embrayage (K) et l'actionneur de changement de vitesse (S) ont atteint leurs états de transition ($K_{ü}$, $S_{ü}$) respectifs.

12. Procédé selon l'une quelconque des revendications 1 à 11, l'actionneur d'embrayage (K) et l'actionneur de changement de vitesse (S) étant commandés de telle sorte que l'actionneur de changement de vitesse (S) atteigne sa valeur de transition ($S_{ü}$) avant l'actionneur d'embrayage (K).

13. Procédé selon l'une quelconque des revendications 1 à 12, un processus d'adaptation de l'actionneur d'embrayage (K) pour atteindre une valeur de transition ($K_{ü}$) et un processus d'adaptation de l'actionneur de changement de vitesse (S) pour atteindre une valeur de transition ($S_{ü}$) étant déclenchés pour l'essentiel simultanément.

14. Procédé selon l'une quelconque des revendications 1 à 13, l'actionneur d'embrayage (K) et/ou l'actionneur de changement de vitesse (S) étant commandés de telle sorte que la valeur de transition ($K_{ü}$, $S_{ü}$) respective est obtenue sans l'aide d'un suroscillateur.

15. Procédé selon l'une quelconque des revendications 1 à 14, l'actionneur d'embrayage (K) et l'actionneur de changement de vitesse (S) pouvant être déclenchés indépendamment l'un de l'autre.

Fig.1

Fig.2

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19652244 A1
- WO 2004076224 A1
- WO 2004076225 A1
- EP 0931961 A1
- EP 0859171 A1
- DE 19540921 A1
- DE 19939818 C1
- DE 10244393 A1

- DE 10054867 A1
- DE 10113700 A1
- EP 1741950 A1
- DE 10101597 A1
- DE 19751455 A1
- DE 10224064 A1
- EP 1067008 A1